# DEMANDE DE BREVET EUROPEEN

(11) **EP 1 575 292 A1**
(43) Date de publication de la demande: **14.09.2005**
(21) Numéro de dépôt: 04100969.7
(22) Date de dépôt: 10.03.2004
(51) Int. Cl.: H04N 7/167

(54) **Méthode de sécurisation d'un contenu chiffré transmis par un diffuseur**

(71) Demandeur: Nagracard S.A., 1033 Cheseaux-sur-Lausanne (CH)
(72) Inventeur: Ksontini, Rached, 1004 Lausanne (CH); Kudelski, Henri, 1071 Chexbres (CH); Groux, Cédric, 1071 Chexbres (CH)
(74) Mandataire: Wenger, Joel-Théophile

(57) **Abrégé**

Le but de la présente invention est de proposer une méthode pour empêcher l'utilisation abusive de données à accès conditionnels, en particulier au moyen de clones de modules de sécurité dont la sécurité a été compromise.

Ce but est atteint par une méthode de sécurisation d'un contenu chiffré par au moins une clé de chiffrement et transmis par un diffuseur à au moins une unité multimédia associée à un module de sécurité, une valeur permettant de déterminer la ou les clés de chiffrement de ce contenu étant également transmise à l'unité multimédia par ledit diffuseur, ledit module de sécurité comprenant des moyens pour déterminer la clé de chiffrement sur la base de ladite valeur, cette méthode comprenant les étapes suivantes :
- génération d'une clé de chiffrement temporaire (MCW),
- chiffrement par la clé temporaire (MCW) de la valeur permettant de déterminer les clés de chiffrement (cw) du contenu;
- transmission de cette valeur chiffrée à destination de ladite unité multimédia,
- chiffrement et transmission d'au moins deux cryptogrammes comprenant la clé temporaire (MCW) chiffrée par une clé d'autorisation (G), le premier cryptogramme étant chiffré par une première clé d'autorisation propre à un premier module de sécurité et le second cryptogramme étant chiffré par une seconde clé d'autorisation qui est propre à un groupe de modules de sécurité dont le premier module de sécurité est exclu.

## Description

La présente invention concerne le domaine de la sécurité de modules de sécurité, ces modules étant destinés à contenir des informations personnelles et secrètes permettent l'accès à ces services ou à des prestations.

Cette invention s'applique plus précisément au domaine de la télévision à péage, dans laquelle un contenu est diffusé sous forme chiffrée, le déchiffrement de ce contenu étant autorisé à des conditions déterminées.

De façon bien connue, pour pouvoir visionner un événement de télévision à péage, tel qu'un film, un événement sportif ou un jeu notamment, plusieurs flux sont diffusés à destination d'une unité multimédia, par exemple d'un décodeur. Ces flux sont notamment d'une part le fichier de l'événement sous forme d'un flux de données chiffrées et d'autre part, un flux de messages de contrôle permettant le déchiffrement du flux de données. Le contenu du flux de données est chiffré par des "mots de contrôle" (Control words = cw), renouvelés régulièrement. Le deuxième flux est appelé flux ECM (Entitlement Control Message) et peut être formé de deux manières différentes. Selon une première manière, les mots de contrôle sont chiffrés par une clé, dite clé de transmission TK, qui est généralement propre au système de transmission entre le centre de gestion et un module de sécurité associé au récepteur/décodeur. Le mot de contrôle est obtenu en déchiffrant les messages de contrôle au moyen de la clé de transmission TK.

Selon une deuxième manière, le flux ECM ne contient pas directement les mots de contrôle chiffrés, mais contient des informations permettant de déterminer les mots de contrôle. Cette détermination des mots de contrôle peut se faire par différentes opérations, en particulier par déchiffrement, ce déchiffrement pouvant aboutir directement au mot de contrôle, ce qui correspond à la première manière décrite ci-dessus, mais le déchiffrement pouvant également aboutir à une donnée qui contient le mot de contrôle, celui-ci devant encore être extrait de la donnée. En particulier, la donnée peut contenir le mot de contrôle ainsi qu'une valeur associée au contenu à diffuser, et notamment les conditions d'accès à ce contenu. Une autre opération permettant la détermination du mot de contrôle peut utiliser par exemple une fonction de hachage à sens unique de cette information notamment.

Les opérations de sécurité sont généralement effectuées dans un module de sécurité associé à l'unité multimédia ou au décodeur. Un tel module de sécurité peut être réalisé en particulier selon quatre formes distinctes. L'une d'elles est une carte à microprocesseur, une carte à puce, ou plus généralement un module électronique (ayant une forme de clé, de badge,...). Un tel module est généralement amovible et connectable au décodeur. La forme avec contacts électriques est la plus utilisée, mais n'exclu pas une liaison sans contact par exemple de type ISO 14443.

Une deuxième forme connue est celle d'un boîtier de circuit intégré placé, généralement de façon définitive et inamovible dans le boîtier du décodeur. Une variante est constituée d'un circuit monté sur un socle ou connecteur tel qu'un connecteur de module SIM.

Dans une troisième forme, le module de sécurité est intégré dans un boîtier de circuit intégré ayant également une autre fonction, par exemple dans un module de désembrouillage du décodeur ou le microprocesseur du décodeur.

Dans une quatrième forme de réalisation, le module de sécurité n'est pas réalisé sous forme matérielle, mais sa fonction est mise en oeuvre sous forme uniquement logicielle. Etant donné que dans les quatre cas, bien que le niveau de sécurité diffère, la fonction est identique, on parlera de module de sécurité quelle que soit la manière de réaliser sa fonction ou la forme que peut prendre ce module.

Lors du déchiffrement d'un message de contrôle (ECM), il est vérifié, dans le module de sécurité, que le droit pour accéder au contenu considéré est présent. Ce droit peut être géré par des messages d'autorisation (EMM = Entitlement Management Message) qui chargent un tel droit dans le module de sécurité.

La diffusion de données numériques à accès conditionnel est schématiquement divisée en trois modules. Le premier module est en charge du chiffrement des données numériques par les mots de contrôle cw et de la diffusion de ces données.

Le deuxième module prépare les messages de contrôle ECM contenant les mots de contrôle cw, ainsi que les conditions d'accès et les diffuse à l'intention des utilisateurs.

Le troisième module quant à lui prépare et transmet les messages d'autorisation EMM qui sont en charge de définir les droits de réception dans les modules de sécurité connectés aux récepteurs.

Alors que les deux premiers modules sont généralement indépendants des destinataires, le troisième module gère l'ensemble des utilisateurs et diffuse des informations à l'intention d'un utilisateur, d'un groupe d'utilisateurs ou tous les utilisateurs.

Une des méthodes pour contourner la sécurité, qui est certes lourde, mais réalisable, consiste à analyser le contenu d'un module de sécurité autorisé (reverse engineering) afin d'imiter la partie sécurité (déchiffrement des messages) tout en court-circuitant la partie vérification des droits. Il est ainsi possible de réaliser un "clone" d'un module de sécurité réel. Un tel clone disposera donc de la clé de transmission, ce qui lui permettra de déchiffrer les mots de contrôle cw contenus dans les messages de contrôle ECM. Comme les droits ne sont pas vérifiés dans ce clone, il fonctionnera comme l'original pour ce qui concerne les moyens de déchiffrement sans pour autant qu'il soit nécessaire de disposer des droits pour réaliser ce déchiffrement.

Dans un système de télévision à péage, il est possible de changer de clé de transmission. Pour ceci, deux méthodes sont en principe utilisables. La première consiste à diffuser la nouvelle clé de transmission à destination de tous les décodeurs. Ceux-ci peuvent alors se mettre à jour de sorte que dès que la nouvelle clé est utilisée, ils peuvent déchiffrer les événements. Ce type de mise à jour ne permet pas d'exclure un décodeur cloné car il pourra recevoir également les messages de mise à jour puisqu'il dispose des clés de déchiffrement afférentes.

Du fait que chaque module de sécurité comprend au moins une clé unique, la deuxième approche consiste à transmettre la nouvelle clé de transmission dans un message crypté par cette clé unique. Dans ce cas, le nombre de messages est au minimum égal au nombre de modules de sécurité installés afin de renouveler individuellement cette clé de transmission. Il est connu que si un module est déclenché, (c'est-à-dire si l'appareil hôte n'est pas alimenté), il ne recevra pas un tel message et ne pourra plus offrir à l'utilisateur les services auxquels il aurait légitiment droit. Pour pallier à cela, lors d'un envoi d'un message destiné à un module, ce message est répété un grand nombre de fois afin d'être sûr que son destinataire l'a bien reçu.

Du fait de la bande passante disponible et pour s'assurer que chaque abonné a bien reçu la nouvelle clé, il est nécessaire de transmettre le message bien avant que cette nouvelle clé ne soit utilisée, par exemple un mois à l'avance.

Dès lors, le possesseur d'un module clone va s'adresser au technicien qui lui a fournit un tel clone et qui dispose de moyens pour extraire la nouvelle clé de transmission d'un module authentique. Une fois la clé mise à disposition, par exemple sur Internet, tous les clones peuvent alors être mis à jour avant même que la nouvelle clé ne soit activée. De cette manière, les clones restent toujours opérationnels.

Il en résulte que l'envoi de clés de transmission aussi bien par transmission globale qu'individuelle présentent des inconvénients et ne permettent pas d'éliminer un module cloné.

Ainsi, le but de la présente invention est de proposer une méthode pour empêcher l'utilisation abusive de données à accès conditionnels, en particulier au moyen de clones de modules de sécurité dont la sécurité a été compromise.

Ce but est atteint par une méthode de sécurisation d'un contenu chiffré par au moins une clé de chiffrement et transmis par un diffuseur à au moins une unité multimédia associée à un module de sécurité, une valeur permettant de déterminer la ou les clés de chiffrement de ce contenu étant également transmise à l'unité multimédia par ledit diffuseur, ledit module de sécurité comprenant des moyens pour déterminer la clé de chiffrement sur la base de ladite valeur, cette méthode comprenant les étapes suivantes :
- génération d'une clé de chiffrement temporaire (MCW),
- chiffrement par la clé temporaire (MCW) de la valeur permettant de déterminer les clés de chiffrement (cw) du contenu;
- transmission de cette valeur chiffrée à destination de ladite unité multimédia,
- chiffrement et transmission d'au moins deux cryptogrammes comprenant la clé temporaire (MCW) chiffrée par une clé d'autorisation (G), le premier cryptogramme étant chiffré par une première clé d'autorisation propre à un premier module de sécurité et le second cryptogramme étant chiffré par une seconde clé d'autorisation qui est propre à un groupe de modules de sécurité dont le premier module de sécurité est exclu.

Le but de l'invention est également atteint par une méthode de sécurisation d'un contenu chiffré par au moins une clé de chiffrement et transmis par un diffuseur à au moins une unité multimédia associée à un module de sécurité, une valeur permettant de déterminer la ou les clés de chiffrement de ce contenu étant également transmise à l'unité multimédia par ledit diffuseur, ledit module de sécurité comprenant des moyens pour déterminer la clé de chiffrement sur la base de ladite valeur, cette méthode comprenant les étapes suivantes :
- génération de ladite valeur permettant de déterminer la ou les clés de chiffrement;
- transmission à l'unité multimédia de ladite valeur permettant de déduire la clé de chiffrement (cw) du contenu,
- génération d'une clé de chiffrement temporaire (MCW),
- transformation, par la clé temporaire (MCW), de la valeur permettant de déterminer les clés de chiffrement du contenu, cette transformation donnant comme résultat, ladite clé de chiffrement (cw) du contenu;
- chiffrement et transmission d'au moins deux cryptogrammes comprenant la clé temporaire (MCW) chiffrée par une clé d'autorisation (G), le premier cryptogramme étant chiffré par une première clé d'autorisation propre à un premier module de sécurité et le second cryptogramme étant chiffré par une seconde clé d'autorisation qui est propre à un groupe de modules de sécurité dont le premier module de sécurité est exclu.

La méthode de l'invention permet de réaliser un adressage pseudo-individuel de messages tout en contournant la nécessité d'envoyer un message à destination de chaque module de sécurité. Ceci permet d'envoyer une clé de déchiffrement uniquement aux modules non clonés et de ne pas transmettre une telle clé aux clones, de sorte qu'ils ne pourront plus déchiffrer les données.

Un des buts de l'invention consiste à combiner l'adressage "individuel" d'une clé de déchiffrement des données, avec un changement fréquent de cette clé. Ces deux notions sont à priori incompatibles du fait qu'il est nécessaire, pour l'adressage individuel, de transmettre un nombre de messages égal au nombre de modules de sécurité, ce qui a pour conséquence d'occuper une bande passante importante lors de la transmission. Cette caractéristique est incompatible avec un changement fréquent de la clé, ce qui est une condition pour une sécurité optimale.

La solution proposée consiste à intégrer dans les messages d'autorisation ECM, non pas les mots de contrôle qui ont été utilisés pour chiffrer les données, mais des mots de contrôle modifiés, à partir desquels il est possible de déterminer les mots de contrôle originaux, à la condition que le module de sécurité dispose d'une clé valable, qui n'a pas été révoquée. Dans l'invention, la détermination des mots de contrôle originaux cw peut être effectuée si le module de sécurité reçoit des "données d'autorisation". La révocation d'un module de sécurité est simplement réalisée en n'envoyant pas les données d'autorisation concernées.

Un flux, qui peut être le flux des messages d'autorisation EMM ou un autre flux spécifique, transmet ces "données d'autorisation", qui permettront aux modules de sécurité de déchiffrer les mots de contrôle modifiés et d'en déduire les mots de contrôle cw, de façon à pouvoir déchiffrer le contenu.

Les données d'autorisation utilisées pour chiffrer ces mots de contrôle cw sont formées au moyen de clés organisées selon une arborescence dans laquelle le niveau le plus haut est composé de clés uniques par module de sécurité, les niveaux inférieurs étant constitués de clés communes pour un groupe de module de sécurité, et ainsi de suite. Plus on descend dans les niveaux, plus le nombre de modules de sécurité par groupe augmente. De cette manière, on associe à chaque module de sécurité une collection de clés qui lui est propre.

Cette multitude de clés associées à différents groupes de modules de sécurité permet un adressage plus fin des "données d'autorisation", et permet ainsi de réduire la bande passante nécessaire à la transmission de ces "données d'autorisation".

Ceci présente l'avantage qu'il est possible de changer de clé de chiffrement à une fréquence nettement plus grande que dans les systèmes conventionnels, par exemple toutes les 1 à 5 minutes, ce qui ne laisse plus le temps à d'éventuels pirates d'obtenir la clé et de la diffuser à destination d'autres pirates. De plus, lorsqu'un module de sécurité a servi à la réalisation d'un clone, il est possible d'identifier ce module de sécurité en déterminant sa collection de clé. Il est alors simple de révoquer ce module de sécurité et ce clone.

L'invention sera mieux comprise grâce à la description détaillée qui va suivre et qui se réfère aux dessins annexés qui sont donnés à titre d'exemple nullement limitatif, dans lesquels :
- la figure 1 illustre schématiquement le chiffrement et le déchiffrement de données selon un premier mode de réalisation du procédé de l'invention;
- la figure 2 illustre le chiffrement et le déchiffrement de données selon un deuxième mode de réalisation du procédé de l'invention;
- la figure 3 illustre le chiffrement et le déchiffrement de données selon un troisième mode de réalisation du procédé de l'invention;
- la figure 4 décrit la hiérarchisation de clés utilisées dans l'invention;
- la figure 5 illustre un exemple des clés contenues dans des modules de sécurité; et
- les figures 6a à 6g représentent schématiquement les messages transmis par le diffuseur aux modules de sécurité.

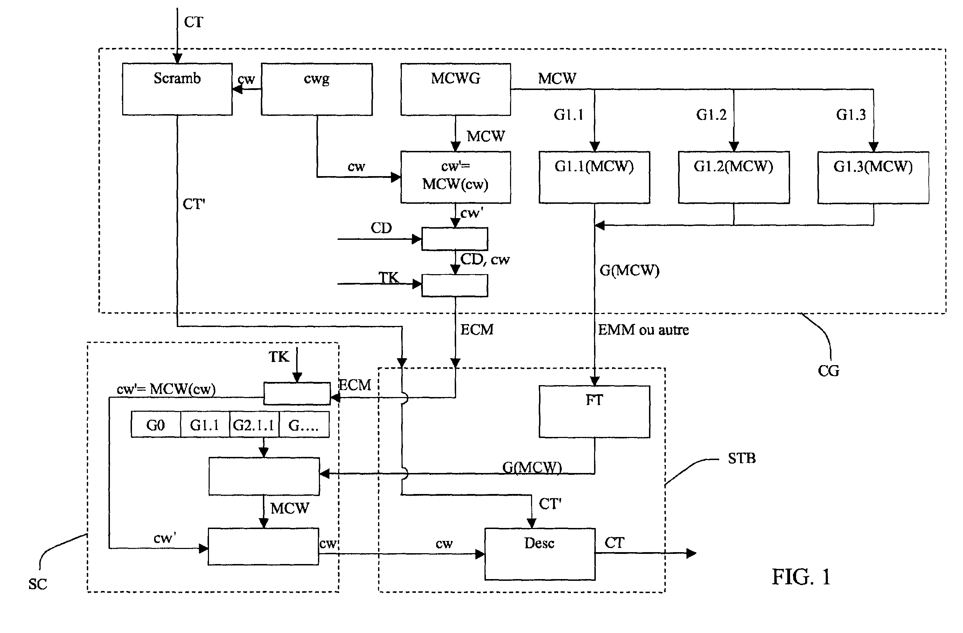

Les figures 1 à 3 illustrent la mise en oeuvre du procédé selon l'invention, aussi bien du côté chiffrement que du côté déchiffrement. Le chiffrement est réalisé au niveau du centre de gestion CG qui envoie des flux à destination de décodeurs STB associés à un module de sécurité SC en charge du déchiffrement des données.

Comme illustré par la figure 1, le centre de gestion CG génère trois flux, qui sont détaillés ci-dessous.

Ce centre de gestion génère tout d'abord, dans un générateur de mots de contrôle cwg, des mots de contrôle cw qui sont utilisés dans un premier temps de façon conventionnelle pour chiffrer un contenu CT à diffuser. Le contenu CT est chiffré lors d'une étape référencée Scramb sur la figure 1. Ce contenu est diffusé sous la forme d'un flux de données chiffrées CT' = cw(CT). De façon bien connue, les mots de contrôle sont changés à intervalles réguliers, par exemple toutes les 2 à 10 secondes, bien que d'autres durées peuvent être envisagées.

Lorsque les mots de contrôle sont générés, ils sont également chiffrés par une clé de chiffrement temporaire, générée en principe de façon aléatoire par un générateur MCWG, et dénommée mot de contrôle maître MCW. On obtient ainsi des mots de contrôle modifié cw' = MCW(cw). Ces mots de contrôle maître sont également changés à intervalles réguliers, par exemple toutes les 1 à 10 minutes. D'autres durées peuvent également être utilisées.

Dans le mode de réalisation de la figure 1, les mots de contrôle modifiés cw' sont mis en forme, en leur ajoutant notamment les conditions d'accès au contenu et un en-tête. Ils sont ensuite chiffrés au moyen de la clé de transmission TK avant d'être diffusés sous forme de messages de contrôle ECM conventionnels.

Il est à noter qu'il est également possible d'ajouter les conditions d'accès CD au mot de contrôle et de chiffrer l'ensemble avec le mot de contrôle maître MCW. Ceci permettrait de se passer du chiffrement par la clé de transmission TK.

Parallèlement, le mot de contrôle maître MCW est chiffré à l'aide de plusieurs clés différentes à destination des différents groupes de modules de sécurité non révoqués. Ces chiffrement s sont effectués avec des clés G, appelées clés d'autorisation et décrites plus en détail ci-dessous. Chaque module de sécurité comprend en fait plusieurs clés d'autorisation, certaines d'entre elles étant uniques et différentes pour chaque module, d'autres étant communes à plusieurs modules. Les clés d'autorisation sont introduites dans les modules de sécurité lors de leur personnalisation.

Lorsque le mot de contrôle maître MCW est chiffré par une clé d'autorisation G, on obtient un bloc d'autorisation G(MCW). Ces blocs d'autorisation sont diffusés soit dans un flux spécifique, soit dans un flux de messages d'autorisation EMM.

Les décodeurs reçoivent donc trois flux, le flux de données chiffrées CT', celui des messages de contrôle ECM et celui des blocs d'autorisation G(MCW). Le flux des messages d'autorisation ECM est filtré de façon conventionnelle et traité par le module de sécurité de façon à en extraire les mots de contrôle modifiés cw'. Pour ceci, il faut tout d'abord déchiffrer le message au moyen de la clé de transmission TK.

Parallèlement, le flux de type EMM ou autre contenant les blocs d'autorisation reçu par un décodeur est filtré dans un filtre FT et traité de façon à en extraire le bloc d'autorisation qui concerne ce décodeur. Celui-ci est alors transmis à son module de sécurité SC. Le bloc d'autorisation G(MCW) est déchiffré au moyen d'un des clés d'autorisation G, ce qui permet de déduire le mot de contrôle maître MCW. Celui-ci est alors utilisé pour déchiffrer le mot de contrôle modifié cw', ce qui permet de déterminer le mot de contrôle cw qui a servi au chiffrement du contenu. Le contenu peut ainsi être déchiffré dans un module de débrouillage Desc. On obtient ainsi le contenu CT en clair.

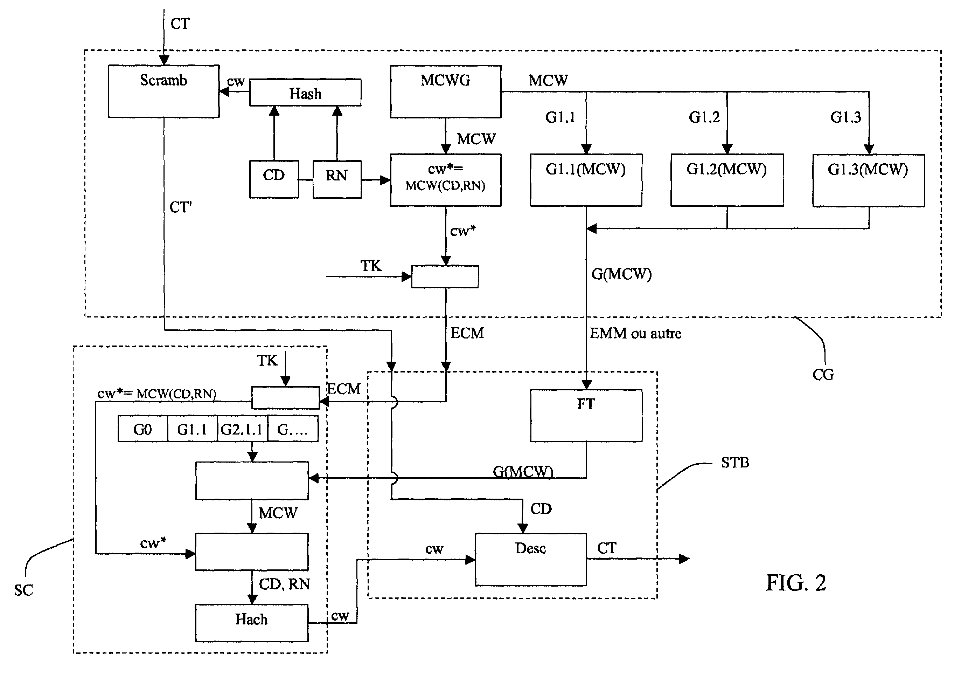

Dans le mode de réalisation illustré par la figure 2, on génère tout d'abord un élément variable RN, qui peut avantageusement être une valeur aléatoire ou pseudo-aléatoire. On peut également, selon une variante, joindre à l'élément variable, un autre élément dépendant du contenu, cet autre élément pouvant par exemple être lié aux conditions d'accès CD à ce contenu. Dans un premier temps, une opération est effectuée sur l'élément variable RN avec ou sans l'élément CD dépendant du contenu. Cette opération peut être une fonction de hachage à sens unique ou une autre opération cryptographique. Le résultat de cette opération est le mot de contrôle cw qui sera utilisé pour le chiffrement du contenu.

L'élément variable RN avec ou sans les conditions d'accès CD est chiffré par le mot de contrôle maître MCW de façon à donner des mots de contrôle modifiés cw*. Ceux-ci sont ensuite traités comme dans le mode de réalisation de la figure 1, c'est-à-dire qu'ils sont chiffrés par la clé de transmission, mis en forme et diffusés en tant que messages de contrôle.

Les mots de contrôle maître MCW sont également chiffrés par les clés d'autorisation G et diffusés dans un flux de messages d'autorisation EMM ou un autre flux spécifique, à destination des décodeurs.

Pour le déchiffrement du contenu chiffré CT', le module de sécurité traite les messages de contrôle ECM de façon à en extraire le mot de contrôle modifié cw*. Il traite également les messages d'autorisation G(MCW) de façon à en extraire le mot de contrôle maître MCW. Celui-ci est alors utilisé pour extraire l'élément variable RN, avec éventuellement l'élément CD dépendant du contenu, à partir du mot de contrôle modifié cw*. A partir des éléments extraits, l'élément variable RN et éventuellement l'élément dépendant du contenu CD, on applique la même opération que celle qui a servi au centre de gestion à générer les mots de contrôle cw à partir de l'élément variable RN. On obtiendra ainsi les mots de contrôle cw qui pourront être utilisés pour déchiffrer le contenu chiffré CT' de façon à obtenir le contenu CT en clair.

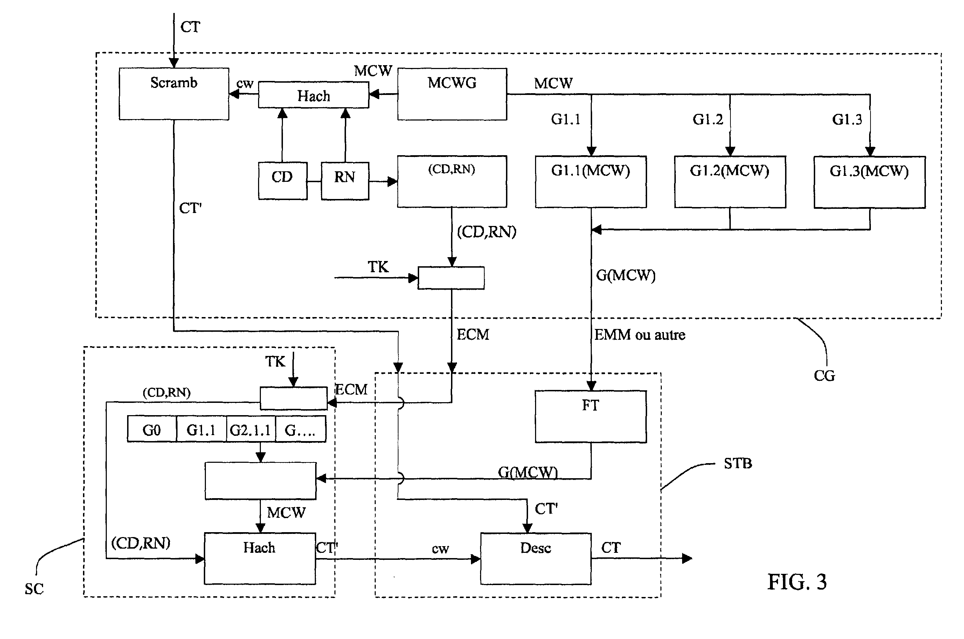

Dans le mode de réalisation de la figure 3, les mots de contrôle cw sont générés à partir d'un élément variable RN, par exemple aléatoire avec éventuellement un élément CD dépendant des conditions d'accès aux données. Dans la suite du texte, par souci de simplification, il est supposé que l'on utilise un élément dépendant du contenu et que cet élément est lié aux conditions d'accès à ce contenu. Dans la pratique, on pourra utiliser un élément ne dépendant pas des conditions d'accès ou uniquement l'élément variable.

Comme précédemment, on génère également des mots de contrôle maître MCW. On fait ensuite subir à l'élément variable RN et aux conditions d'accès CD, une opération dépendant des mots de contrôle maître MCW. Une telle opération est typiquement une opération de hachage avec clé, la clé étant le mot de contrôle maître. Le résultat de cette opération est le mot de contrôle cw utilisé pour chiffrer le contenu CT.

L'élément variable RN et les conditions d'accès CD sont chiffrés par la clé de transmission TK, mis en forme et envoyés comme message de contrôle ECM au décodeur. Les blocs d'autorisation contenant les mots de contrôle maître chiffrés par les clés d'autorisation G sont également transmis au décodeur.

Le module de sécurité associé au décodeur extrait l'élément variable RN et les conditions d'accès. Il déchiffre également les mots de contrôle maître MCW. A partir de ces éléments, il applique l'opération ayant servi à créer les mots de contrôle dans le centre de gestion, cette opération étant, dans l'exemple décrit, une fonction de hachage à clé, la clé étant le mot de contrôle maître. On obtient ainsi les mots de contrôle cw, qui sont alors utilisés pour déchiffrer le contenu chiffré CT'.

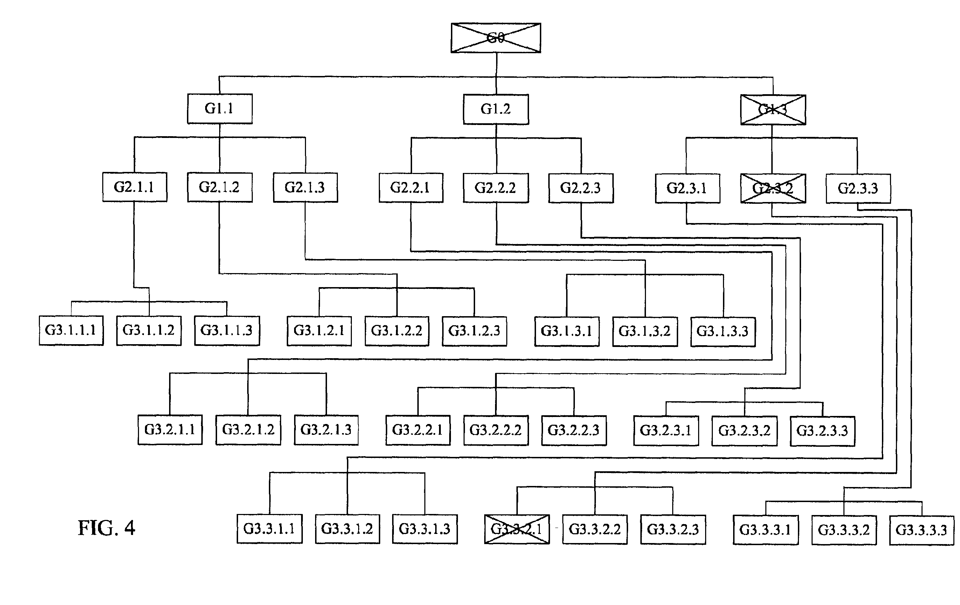

Selon le procédé de l'invention, pour révoquer un module de sécurité, il faut déterminer l'ensemble des clés d'autorisation présentes dans ce module à révoquer, puis il ne faut pas diffuser les blocs d'autorisation correspondant à une de ces clés du module à révoquer. Il faut par contre diffuser les blocs d'autorisation nécessaires au bon fonctionnement de tous les modules non révoqués. Pour des questions d'optimisation de l'utilisation de la bande passante, il n'est pas possible ou pas souhaitable d'envoyer des blocs d'autorisation chiffrés avec une clé unique de chaque module de sécurité. En effet, dès lors que le nombre de modules de sécurité à gérer devient grand, la bande passante disponible risque d'être insuffisante. Pour résoudre ce problème, chaque module de sécurité contient, comme indiqué précédemment, une pluralité de clés d'autorisation G. Ces clés sont organisées selon une arborescence décrite en détail en référence à la figure 4.

Plus généralement, si par exemple une clé d'autorisation est extraite d'un module de sécurité et est partagée via Internet, il est possible de révoquer cette clé d'autorisation en ne diffusant plus les blocs d'autorisation correspondant à cette clé d'autorisation. En d'autres termes, révoquer un module de sécurité et ses clones revient à révoquer toutes les clés d'autorisations présentes dans le module de sécurité en question.

La figure 4 illustre un mode de réalisation dans lequel on gère 27 modules de sécurité différents. Ces modules sont répartis en groupes de trois éléments. Ces neuf groupes de trois éléments sont eux aussi groupés par trois. Le principe de l'invention est strictement le même, quelle que soit la taille des groupes. Sur la figure 4 sont représentées toutes les clés d'autorisations réparties dans les 27 modules de sécurité. Le système de la figure 4 dispose de quatre niveaux de clés, ce qui signifie que chaque module de sécurité contient quatre clés d'autorisation.

L'une de ces clés, notée G0 sur la figure 4 est commune à 3³ soit aux 27 modules de sécurité, ce qui représente la totalité des modules dans l'exemple considéré. Cette clé est utilisée pour chiffrer les mots de contrôle maître MCW aussi longtemps qu'aucun module de sécurité ne doit être révoqué et former ainsi un bloc d'autorisation G(MCW).

Une deuxième clé d'autorisation, dénommée clé de niveau 1 et notée G1 dans la figure est commune à un groupe de 3² soit 9 modules de sécurité. Il faut ainsi trois clés de niveau 1 pour couvrir l'ensemble des 27 modules de sécurité. Ces clés sont référencées sur la figure par G 1, suivi des chiffres 1, 2 ou 3 correspondant chacun à un groupe de 9 modules de sécurité.

Une troisième clé d'autorisation, dite de niveau 2, porte la référence G2, suivi du chiffre 1, 2 ou 3 du groupe de 1^{er} niveau auquel elle appartient et suivi du chiffre 1, 2 ou 3 correspondant au groupe de deuxième niveau. Une clé de deuxième niveau est commune à 3¹, soit 3 modules de sécurité.

Les modules de sécurité contiennent en outre une clé d'autorisation de 3^{ème} niveau, référencée par G3, cette référence contenant également les identifiants des groupes de 1^{er} et 2^{ème} niveau, suivi des chiffres 1, 2 ou 3. Une telle clé est commune à 3⁰, soit 1 module de sécurité. Autrement dit, ces clés de niveau 3 sont uniques pour chaque module de sécurité.

Ainsi, selon le niveau de la clé, une clé est commune pour 3⁰ = 1 module de sécurité, 3¹ = 3 modules, 3² = 9 modules et 3³ = 27 modules. Comme indiqué précédemment, l'exemple de réalisation expliqué est limité à 27 décodeurs pour la clarté de l'illustration. En pratique, on peut utiliser des groupes formés par une puissance de 2 modules, par exemple de 16 modules de sécurité, avec par exemple 7 niveaux de clés, c'est-à-dire une collection de 7 clés chargées dans chacun des modules de sécurité, ce qui permettrait de gérer plus de 16 millions de modules.

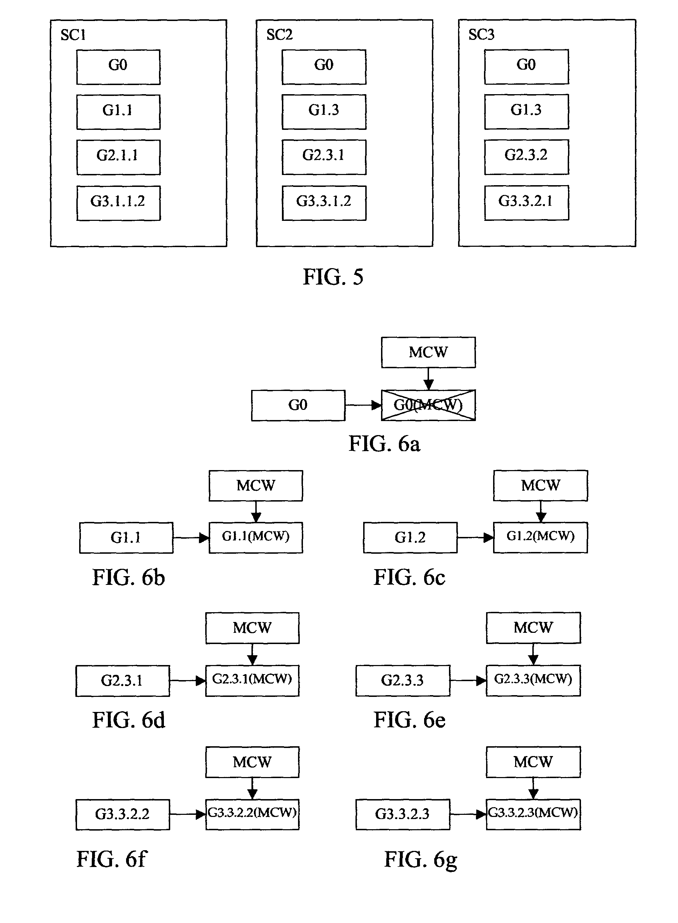

Comme cela est illustré par la figure 5, les modules de sécurité contiennent tous, selon une hiérarchie déterminée, la clé d'autorisation G0 de niveau 0, une clé de niveau 1, une clé de niveau 2 et une clé de niveau 3. Il est à noter que, pour assurer la sécurité des modules de sécurité, les clés qu'ils contiennent ne sont de préférence pas envoyées dans un message, mais sont chargées en usine, lors d'une étape de personnalisation des modules.

En fonctionnement normal, c'est-à-dire lorsque tous les modules de sécurité sont actifs, les données d'autorisation sont systématiquement chiffrées à l'aide de la clé globale G0 connue de tous les modules de sécurité, comme cela est expliqué précédemment.

Lorsque l'on ne souhaite plus utiliser la clé globale G0, par exemple lorsque l'un des modules de sécurité est considéré comme étant un clone et qu'il doit par conséquent être révoqué, on chiffre les blocs d'autorisation uniquement avec les clés d'autorisation des modules de sécurité à conserver. On envoie donc un message contenant le mot de contrôle maître MCW à utiliser, ce mot de contrôle étant chiffré par une clé d'autorisation différente de la clé globale G0. Comme mentionné précédemment, selon les systèmes de l'art antérieur, il est nécessaire de transmettre un message individuel à chaque module de sécurité autorisé, ce qui implique un nombre considérable de messages à envoyer, ce d'autant plus que les messages sont répétés plusieurs fois afin d'être certain que chaque utilisateur a bien reçu le message.

Pour expliquer le procédé selon l'invention en se référant à la figure 4, on suppose que le module de sécurité ayant la clé d'autorisation unique G3.3.2.1 est considéré comme un clone et le droit de déchiffrer les données doit lui être dénié. Comme ce module appartient au groupe ayant la clé d'autorisation G0, comme d'ailleurs tous les modules, il n'est plus possible d'utiliser cette clé G0, ce qui est représenté schématiquement par la figure 6a. Le module à révoquer appartient également au groupe ayant la clé de premier niveau G1.3. Il faut donc également ne plus utiliser cette clé d'autorisation. La suppression de la clé G0 pour le déchiffrement a pour effet d'empêcher tous les modules de sécurité de déchiffrer des données, ce qui n'est bien entendu pas souhaité. Pour permettre aux modules non révoqués de fonctionner correctement, il faut utiliser une autre clé d'autorisation. En pratique, on cherche à utiliser les clés de chiffrement valables pour le groupe contenant le plus grand nombre possible de modules de sécurité, ce groupe ne devant pas contenir le module à désactiver. Selon cette règle, on n'utilise plus la clé G0, mais on peut utiliser les clés de premier niveau G1.1 et G1.2, puisque le module à désactiver, ayant la clé unique G3.3.2.1 n'appartient pas au groupe ayant ces clés de 1^{er} niveau. Le chiffrement et l'envoi du mot de contrôle maître MCW chiffré par ces clés de 1^{er} niveau est illustré schématiquement par les figures 6b et 6c respectivement.

Ainsi, par l'envoi de messages chiffrés par deux clés d'autorisation différentes, à savoir G1.1 et G1.2, tous les modules appartenant à ces groupes, ce qui correspond à 18 modules, fonctionnent correctement. La clé G1.3 n'a pas été utilisée parce que le module à désactiver appartient au groupe utilisant cette clé G1.3. Ceci a pour effet de rendre inutilisable les 9 modules qui appartiennent à ce groupe. Le module à bloquer appartient au groupe ayant la clé de 2^{ème} niveau G2.3.2. On utilise par conséquent les autres clés de 2^{ème} niveau, à savoir G2.3.1 et G2.3.3, comme cela est illustré respectivement par les figures 6d et 6e, sans utiliser G2.3.2. Ceci a pour effet de bloquer trois modules à savoir ceux ayant les clés G3.3.2.1, G3.3.2.2 et G3.3.2.3. Seul l'un de ces modules doit être bloqué. Pour permettre aux deux autres modules de fonctionner, on utilise les clés G3.3.2.2 et G3.3.2.3, comme cela est représenté par les figures 6f et 6g, ce qui a pour effet que seul le module à éliminer ne peut plus déchiffrer des données. Ainsi, dans l'exemple de réalisation décrit, pour désactiver un module de sécurité, il faut utiliser deux clés de niveau 1, deux clés de niveau 2 et deux clés de niveau 3, soit 6 clés, pour un total de 27 modules de sécurité. Il est à noter que dans un système conventionnel, il faudrait chiffrer les messages avec 26 clés différentes pour permettre à tous les modules sauf 1 de fonctionner.

Par extension, on peut montrer que si l'on appelle κ le nombre de niveaux, c'est-à-dire le nombre de clés d'autorisation stockées dans chacun des modules de sécurité, et n le nombre de modules de sécurité par groupe, le nombre de modules qu'il est possible de gérer est égal à n^{(κ-1)} et le nombre de clés à utiliser pour éliminer un module parmi ces n^{(κ-1)} modules est égal à (n-1)*(κ-1). Dans un mode de réalisation où le nombre de modules par groupe est de 16 (n=16), et comportant 7 niveaux de clés (κ=7), on doit envoyer 90 données d'autorisation, en utilisant 90 clés d'autorisation différentes pour isoler un module parmi plus de 16 millions de modules (16'777'216 précisément).

Le nombre de clés qu'il faut utiliser pour isoler un deuxième module dépend de la relation entre les deux modules à éliminer ou en d'autres termes, de leur position relative dans l'arborescence illustrée par la figure 4. Le cas le plus favorable correspond à deux modules à éliminer appartenant au même groupe de l'avant dernier niveau, soit, en référence à la figure 4, deux modules ayant une même clé de deuxième niveau G2. Dans ce cas, le nombre de clés à utiliser correspond à une de moins que pour l'élimination d'un seul module, à savoir [(n-1)*(κ-1)]-1 dans le cas général, 89 clés dans le contexte des groupes de 16 modules répartis en 7 niveaux et 5 clés dans l'exemple de réalisation de la figure 4.

Le cas le plus défavorable correspond au cas où les deux modules ont comme seule clé commune, la clé de niveau 0 G0. Dans ce cas, le nombre de messages à générer est égal à (n-2)+2(n-1)(κ-2) dans le cas général, soit 164 clés dans le contexte des groupes de 16 modules répartis en 7 niveaux et 9 clés dans l'exemple de réalisation de la figure 2.

Cette invention est particulièrement intéressante du fait que le nombre de messages à traiter peut être extrêmement restreint. Ainsi, il est possible de changer fréquemment de mot de contrôle maître, par exemple une fois par minute, de façon à décourager tout piratage.

Afin d'envoyer le moins de messages possibles, on cherche à utiliser les clés communes au plus grand nombre de modules de sécurité possible, tout en excluant le module à désactiver. Ainsi, en se référant à la figure 4, on utilisera la clé G1.1 plutôt que les 3 clés G2.1.1, G2.1.2 et G2.1.3. Toutefois, ce procédé fonctionne également en utilisant ces trois clés, sans toutefois minimiser le nombre de messages à transmettre.

Comme indiqué précédemment, les modules de sécurité contiennent plusieurs clés d'autorisation. Lorsqu'un module de sécurité reçoit un message, on peut convenir qu'il devra utiliser la clé de niveau le plus bas possible. A titre d'exemple, si un module reçoit un message chiffré au moyen d'une clé de niveau 1 et d'une clé de niveau 3, il devra utiliser la clé de niveau 1 pour déchiffrer le message. Il est possible de prévoir d'autres moyens de détermination de la clé à utiliser, ces moyens devant permettre de connaître le niveau de la clé à utiliser.

Il est à noter que les mots de contrôle maître MCW sont généralement les mêmes pour plusieurs canaux, ce qui permet un déchiffrement rapide lorsque l'utilisateur change de canal. Il est toutefois aussi possible d'utiliser des mots de contrôle maître MCW différents, ce qui est généralement le cas lorsque le chiffrement est réalisé par des fournisseurs différents.

## Revendications

1. Méthode de sécurisation d'un contenu chiffré par au moins une clé de chiffrement et transmis par un diffuseur à au moins une unité multimédia associée à un module de sécurité, une valeur permettant de déterminer la ou les clés de chiffrement de ce contenu étant également transmise à l'unité multimédia par ledit diffuseur, ledit module de sécurité comprenant des moyens pour déterminer la clé de chiffrement sur la base de ladite valeur, cette méthode comprenant les étapes suivantes :
- génération d'une clé de chiffrement temporaire (MCW),
- chiffrement par la clé temporaire (MCW) de la valeur permettant de déterminer les clés de chiffrement (cw) du contenu;
- transmission de cette valeur chiffrée à destination de ladite unité multimédia,
- chiffrement et transmission d'au moins deux cryptogrammes comprenant la clé temporaire (MCW) chiffrée par une clé d'autorisation (G), le premier cryptogramme étant chiffré par une première clé d'autorisation propre à un premier module de sécurité et le second cryptogramme étant chiffré par une seconde clé d'autorisation qui est propre à un groupe de modules de sécurité dont le premier module de sécurité est exclu.

2. Méthode selon la revendication 1, **caractérisée en ce que** ladite valeur permettant de déterminer la ou les clés de chiffrement du contenu est la clé de chiffrement elle-même.

3. Méthode selon les revendications 1 ou 2, **caractérisée en ce que** ladite valeur permettant de déterminer la ou les clés de chiffrement du contenu comprend au moins un élément variable (RN) et **en ce que** l'on construit ladite clé de chiffrement (cw) à partir de cet élément variable (RN).

4. Méthode selon la revendication 3, **caractérisée en ce que** ladite valeur permettant de déterminer la ou les clés de chiffrement comprend en outre un élément supplémentaire (CD) relatif au contenu (CT) en plus de l'élément variable (RN).

5. Méthode selon la revendication 4, **caractérisée en ce que** ledit élément supplémentaire (CD) contient les conditions d'accès au contenu diffusé (CT).

6. Méthode selon l'une quelconque des revendication 3 à 5, **caractérisée en ce que** l'on construit ladite clé de chiffrement (cw) au moyen d'une fonction de hachage appliquée au moins audit élément variable (RN).

7. Méthode selon l'une quelconque des revendication 3 à 5, **caractérisée en ce que** l'on construit ladite clé de chiffrement (cw) au moyen d'une fonction de chiffrement appliquée au moins audit élément variable (RN).

8. Méthode de sécurisation d'un contenu chiffré par au moins une clé de chiffrement et transmis par un diffuseur à au moins une unité multimédia associée à un module de sécurité, une valeur permettant de déterminer la ou les clés de chiffrement de ce contenu étant également transmise à l'unité multimédia par ledit diffuseur, ledit module de sécurité comprenant des moyens pour déterminer la clé de chiffrement sur la base de ladite valeur, cette méthode comprenant les étapes suivantes :
- génération de ladite valeur permettant de déterminer la ou les clés de chiffrement;
- transmission à l'unité multimédia de ladite valeur permettant de déduire la clé de chiffrement (cw) du contenu,
- génération d'une clé de chiffrement temporaire (MCW),
- transformation, par la clé temporaire (MCW), de la valeur permettant de déterminer les clés de chiffrement du contenu, cette transformation donnant comme résultat, ladite clé de chiffrement (cw) du contenu;
- chiffrement et transmission d'au moins deux cryptogrammes comprenant la clé temporaire (MCW) chiffrée par une clé d'autorisation (G), le premier cryptogramme étant chiffré par une première clé d'autorisation propre à un premier module de sécurité et le second cryptogramme étant chiffré par une seconde clé d'autorisation qui est propre à un groupe de modules de sécurité dont le premier module de sécurité est exclu.

9. Méthode selon la revendication 8, **caractérisée en ce que** ladite valeur permettant de déterminer la ou les clés de chiffrement du contenu comprend au moins un élément variable (RN) et **en ce que** l'on construit ladite clé de chiffrement (cw) à partir de cet élément variable (RN).

10. Méthode selon la revendication 9, **caractérisée en ce que** ladite valeur permettant de déterminer la ou les clés de chiffrement comprend en outre un élément supplémentaire (CD) en plus de l'élément variable (RN).

11. Méthode selon la revendication 10, **caractérisée en ce que** ledit élément supplémentaire (CD) contient les conditions d'accès au contenu diffusé (CT).

12. Méthode selon la revendication 8, **caractérisée en ce que** la transformation est une opération de hachage à clé, la clé étant la clé de chiffrement temporaire (MCW).

13. Méthode selon l'une quelconque des revendications précédentes, **caractérisée en ce que** l'on classe les clés d'autorisation (G) en niveaux, les clés du niveau le plus élevé étant uniques et individuelles pour un module de sécurité, la clé de niveau le plus bas étant connue de tous les modules de sécurité et les clés de niveau intermédiaire étant communes à un sous-ensemble de modules de sécurité, ce sous-ensemble ne contenant pas tous les modules.

14. Méthode selon la revendication 13, destinée à la révocation d'un ou plusieurs modules de sécurité, **caractérisée en ce que** l'on utilise comme seconde clé d'autorisation (G) destinée au chiffrement de la clé temporaire, les clés communes au groupe de modules de sécurité le plus grand possible, ce groupe n'incluant pas le ou les modules de sécurité révoqués.

15. Méthode selon la revendication 13, **caractérisée en ce que** l'on envoie un message aux modules de sécurité, leur indiquant le niveau de la clé d'autorisation (G) qu'ils doivent utiliser.
